# EUROPEAN PATENT SPECIFICATION

(11) **EP 0 875 898 B1**
(45) Date of publication and mention of the grant of the patent: **16.01.2002**
(21) Application number: 98107994.0
(22) Date of filing: 30.04.1998
(51) Int. Cl.: G11B 33/04

(54) **Compact disc storage case**
Kompactplatten aufbewahrungsbehälte
Boitier de stockage pour disque compact

(30) Priority: 30.04.1997 JP 11269097
(43) Date of publication of application: 04.11.1998
(73) Proprietor: Nepco S.A., 14130 Pont l'Evêque (FR)
(72) Inventor: Sato, Hiroyuki, Ashigarakami-gun, Kanagawa-ken (JP)
(74) Representative: Müller-Boré & Partner Patentanwälte

(56) References cited:
- EP-A- 0 666 569
- US-A- 5 697 497

## Description

This invention concerns a flat, roughly parallelepipedic storage case capable of storing relatively small-diameter optical recording discs (hereinafter referred to simply as compact discs), and concerns in particular a compact disc storage case having an improved means of securing the label of said case.

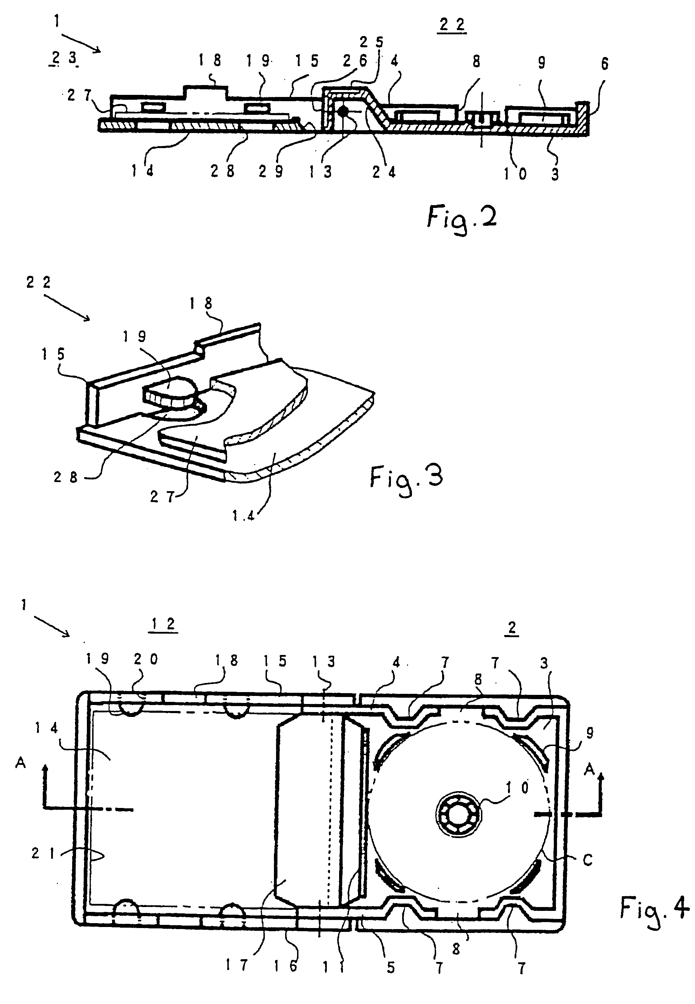

In recent years, for example, many compact discs having a diameter of roughly 12 centimeters and a large storage capacity have been released commercially. Said compact discs are normally placed and stored in cases like those shown in Figs. 4 through 7.

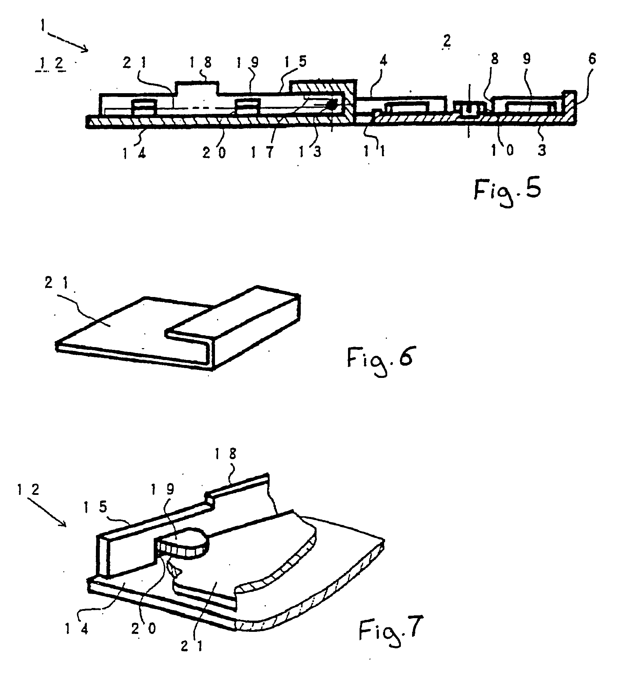

Fig. 4 is a top view of a conventional compact disc case (1) in its opened state; Fig. 5, a cross-section cut along line A-A in Fig. 4; Fig. 6, an oblique view of the label (21) folded into an L shape that is inserted into the pocket (17) in the lid (12) that comprises part of said compact disc storage case (1), and Fig. 7, an oblique view of the label tab (19), and its periphery, that projects from the inner surface of the sides (15, 16) of said lid (12).

The conventional compact disc case (1) would comprise a storage compartment (2) and a lid (12) together forming a flat parallelepiped. Said storage compartment (2), in addition to having, protruding from the middle of the inner surface of its bottom panel (3), a disc stopper (10) that fits into the compact disc's center hole and stops the compact disc from moving in the radial direction, would have multiple disc anchors (9) arranged around said compact disc's outer edge. Furthermore, said storage compartment (2) would be enclosed by both sides (4, 5) and the front (6) along the inner periphery of three sides of said bottom panel (3). On the remaining side of said bottom panel (3) would be a notch (16) in such a manner that the pocket (17) of said lid (12), described below, aligns with the plane of said bottom panel (3) when said lid (12) rotates. On a section of said sides (4, 5) there would be multiple clasping depressions (7) that clasp the label tabs (19) of said lid, described below, and apertures (8) that facilitate the insertion and removal of said compact discs (CD). At the ends of said sides (4, 5) would be the bearing holes into which the axis (13) of said lid (12) insert.

On said lid (12), the sides (15, 16) would protrude, along the periphery of the inner surface of two sides of the top panel (14), slightly higher than said sides (4, 5) of said storage compartment, and have a rising (18) corresponding to the aforementioned aperture (8), while the inner surface of said sides (15, 16) would have multiple label tabs (19) corresponding to said clasping depressions (7) in said storage compartment (2).

Additionally; at the intersection between the top face of said label tabs (19) and the inner surface of said sides (4, 5) there would be a hole (20) formed by a slide core comprising a portion of the formed die. Also, said lid (12) would have a pocket (17) extending with an L-shaped profile from one edge of said top panel (14) along the side opposing the notch (11) in said bottom panel (3), and said top panel (14) between this pocket (17) and said sides (15, 16) would have a slot (not shown) permitting the insertion and rotation of one end each of said sides (4, 5). A conventional compact disc storage case (1) thus comprised would have an aforesaid lid (12) made of transparent plastic so that, at the very least, when a portion of the label (21) in Fig. 6 folded into a roughly L-shaped section was inserted between the inner surface of said top panel (14) and the top face of said label tabs (19) while fitting the L-shaped portion of aforesaid label (21 ) in the inner surface of said pocket (17), information about the contents stored on the compact disc (CD) that had been printed on the outer surface of the foldings of the label (21) would be visible from the outer faces of said lid (12).

However, with the conventional compact disc storage case (1) described above, an undercut would result from the overlapping in the same direction as said top panel (14) of the inner surface of said pocket (17) and the label tabs (19) of said lid (12), necessitating the addition of slide cores to the forming die, and in particular necessitating that the slide cores pass through the positions in the undercut of each said label tab (19) corresponding to said holes (20), thereby precluding significant reductions in die fabrications costs, assembly costs and maintenance costs, and also making it difficult to improve forming tact.

EP 0 666 569 A2 discloses a flat, parallelepipedic compact disc storage case having a lid movably hinged at a disc storage compartment. The disc storage compartment comprises a rising consisting of several ribs at the side at which the lid is hinged.

It-is the object of the invention to provide an improved compact disc storage case that resolves the problems with conventional techniques, lowers forming costs, increases the efficiency of forming work and allows an improved securing of a label.

This object is solved by a disc storage case having the features defined in claim 1. Preferred embodiments are defined in the dependent subclaims.

The flat, parallelepipedic compact disc storage case has a lid moveably hinged at one end of the lid's sides to one end of the sides of the disc storage compartment, and characterized by said storage compartment having a rising projecting from the bottom panel between the ends of said sides; and by the labels being secured to the outer surface of said rising.

Being that the compact disc storage case that is this invention is a flat, parallelepipedic compact disc storage case having a lid moveably hinged at one end of the lid's sides to one end of the sides of the disc storage compartment; that said storage compartment has a rising projecting from the bottom panel between the ends of said sides; and that the labels are secured to the outer surface of said rising, relatively large undercuts such as conventional pockets are eliminated, the rising does not form undercuts, and the storage compartment, after forming, is easily discharged from the die cavity.

Said rising has a top face and side face capable of securing the oblong, rectangular labels.

As said rising of the compact disc storage case that is this invention has a top face and side face capable of securing the oblong, rectangular labels, information concerning said compact disc is fully visible and intelligible from the exterior even when the lid of the case is closed.

Furthermore, it is preferred that said lid has holes in its top panel larger than the projected area of the label tabs and opposing the label tabs, which project from the inner surfaces of said sides.

Because said lid of the compact disc storage case that is this invention has holes in said top panel larger than the projected area of the label tabs and opposing the label tabs, which project from the inner surfaces of said sides, projections for the stationary-side die that form the top panel-side undercut of said label tabs are arranged in the place of slide cores for the undercut of said label tabs, and the formed lid, from which said label tabs protrude, is easily discharged from the die cavity as the movable-side die is opened.

Preferably, said label tabs also function as closure tabs for said lid.

Because said label tabs of the compact disc storage case that is this invention also function as closure tabs for said lid, there is no increase in protrusions having an undercut in the inner surface of the sides of said lid.

The invention is described below by way of an example with reference to the attached drawings, in which
- Fig. 1: shows a top view of the compact disc storage case that is this invention in its opened state,
- Fig. 2: shows a cross-section cut along line B-B in Fig. 1,
- Fig. 3: shows an oblique view of the label tab that projects from the inner sides of the sides of said lid that comprises a portion of the compact disc storage case that is this invention, and the holes peripheral to said label tabs,
- Fig. 4: shows a top view of a conventional compact disc storage case in its opened state,
- Fig. 5: shows a cross-section cut along line A-A in Fig. 4,
- Fig. 6: shows an oblique view of the label, bent into an L shape, that is inserted into the pocket of the lid that comprises a portion of the conventional compact disc storage case in Fig. 4 and
- Fig. 7: shows an oblique view of the label tab, and its periphery, that projects from the inner surface of the sides of a conventional lid

One embodiment of the compact disc storage case (30) that is this invention is described below using the attached drawings. Also, as all members of the compact disc storage case (30) that is this invention other than the rising (24) of the storage compartment and the holes (28) of the lid (23), which are described later, are the same as those of the above-mentioned conventional compact disc storage case (1), the same reference numbers are used in the description.

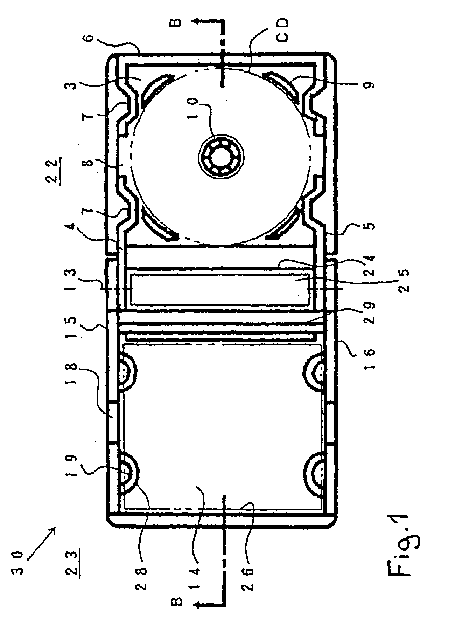

Fig. 1 is a top view of the compact disc storage case (30) that is this invention in its opened state; Fig. 2, a cross- section cut along line B-B in Fig. 1; Fig. 3, an oblique view of the label tab (19) that projects from the inner sides (15, 16) of the sides of said lid (23) that comprises a portion of the compact disc storage case (30) that is this invention, and the holes (28) peripheral to said label tabs (19).

The compact disc storage case (30) that is this invention comprises a combination of a storage compartment (22) and lid (23) that together form a flat parallelepiped. Said storage compartment (22), in addition to having, protruding from the middle of the inner surface of its bottom panel (3), a disc stopper (10) that fits into the compact disc's center hole and stops the compact disc (CD) from moving in the radial direction, has multiple disc anchors (9) arranged around said compact disc's outer edge.

Furthermore, said storage compartment (22) is enclosed by the sides (4, 5) and the front (6) along the inner periphery of three sides of said bottom panel (3). On the remaining side of said bottom panel (3) is a rising (24) that protrudes in a such a manner as to bridge the ends of said sides (4, 5).

On a portion of said sides (4, 5) there are multiple clasping depressions (7) that clasp the label tabs (19) of said lid (23), described below, and apertures (8) that facilitate the insertion and removal of said compact discs (CD). The axis (13) for said lid (23) inserts into the ends of said sides (4, 5), supporting said lid (23) and allowing it to rotate.

On said lid (23), the sides (15, 16) protrude, along the periphery of the inner surface of two sides of the top panel (14), slightly higher than said sides (4, 5) of said storage compartment (22), and have a rising (18) of a height corresponding to the aforementioned apertures (8), while the inner surface of said sides (15, 16) has multiple protruding label tabs (19) corresponding to said clasping depressions (7) in said storage compartment (22).

Formed in the inner surface of said top panel and opposing said label tabs (19) are holes (28) formed by protrusions (not shown) in the stationary-side die that comprises a portion of the forming die. By designing said holes (23) to have roughly the same projected profile as said label tabs (19) and to occupy equal or greater surface area, label tabs (19) with good contours and parting lines can be obtained through cooperation with the movable-side die. In addition, said lid (23) has a notch (29) on the side opposing said rising (24) that assures that the top face of said rising (24) aligns in a coplanar manner with said top panel (14) when said lid (23) is rotated.

Thus comprised, the compact disc storage case (30) that is this invention at the very least allows information about the contents stored on the compact disc (CD) that has been printed on the outer surface of the labels to be viewed through the outer faces of said case (30) by fabricating said lid (23) of transparent plastic, affixing and securing an oblong, rectangular top face label (25) and side face label (26) to the respective depressions of slight depth formed in the top face and side face of said rising (24), and, when necessary, inserting a top panel label (27) into the so-called undercut portion between the top panel (14) and the top face of said label tabs (19).

The above-mentioned compact disc storage case (30) that is this invention will have new effects like the following: Namely, being that the compact disc storage case (30) that is this invention (30) is a flat, parallelepipedic compact disc storage case having a lid (23) moveably hinged at one end of the lid's sides (15, 16) to one end of the sides (4, 5) of the disc storage compartment (22); and that said storage compartment (22) has said rising (24) protruding from said bottom panel (3) between the ends of said sides (4, 5) so that the label is secured to the outer face of said rising (24), relatively large undercuts such as conventional pockets are eliminated, said rising does not form undercuts, and said storage compartment (22), after forming, is easily discharged from the die cavity.

Furthermore, as said rising (24) of the compact disc storage case (30) that is this invention has a top face and side face capable of securing the oblong, rectangular labels (25, 26), information concerning said compact disc (CD) is fully visible and intelligible from the exterior even when the lid of the case is closed.

Furthermore, because said lid (23) of the compact disc storage case (30) that is this invention has said holes (28) in said top panel (14) larger than the projected area of the label tabs (19) and opposing the label tabs (19), which project from the inner surfaces of said sides (15, 16), projections for the stationary-side die that form the top panel-side undercut of said label tabs (19) are arranged in the place of slide cores for the undercut of said label tabs (19), and the formed lid (23), from which said label tabs (19) protrude, is easily discharged from the die cavity as the movable-side die is opened.

Furthermore, because said label tabs (19) of the compact disc storage case (30) that is this invention also function as closure tabs for said lid (23), increase in protrusions having undercut in the inner surface of the sides (15, 16) of said lid (23) can be minimized.

Because said lid (23) has holes (28) in its top panel (14) larger than the projected area of the label tabs (19) and opposing the label tabs (19), which project from the inner surfaces of said sides (15, 16), projections for the stationary-side die that form the top panel-side undercut of said label tabs (19) are located at the positions corresponding to said holes (28), and the formed lid (23), from which said label tabs (19) protrude, is easily discharged from the die cavity as the movable-side die is opened.

Furthermore, because said label tabs (19) of the compact disc storage case (30) that is this invention also function as closure tabs for said lid (23), an increase in protrusions having a so-called undercut in the inner surface of the sides (15, 16) of said lid (23) can be avoided.

Hence, the compact disc storage case (30) that is this invention has made it possible to reduce forming costs and increase the efficiency of forming work.

### List of reference numerals

- 1: Conventional compact disc storage case
- 2: Storage compartment
- 3: Bottom panel
- 4: Side
- 5: Side
- 6: Front
- 7: Clasping depression
- 8: Aperture
- 9: Disc anchor
- 10: Disc stopper
- 11: Notch
- 12: Lid
- 13: Axis
- 14: Top panel
- 15: Side
- 16: Side
- 17: Pocket
- 18: Rising
- 19: Label tab
- 20: Hole
- 21: Label
- 22: Storage compartment of this invention
- 23: Lid of this invention
- 24: Rising
- 25: Top face label
- 26: Side face label
- 27: Top panel label
- 28: Hole of this invention
- 29: Notch
- 30: Compact disc storage case of this invention
- CD: Compact disk

## Claims

1. A flat, parallelepipedic compact disc storage case (30) having a lid (23) moveably hinged at one end of the lid's sides to one end of the sides (4-6) of a disc storage compartment (22),
the storage compartment (22) having a rising (24) projecting from the bottom panel (3) between the ends of said sides (4, 5)
**characterized in that**
the rising (24) is provided with depressions of slight depth formed in the top face and the side face thereof for affixing a top face label (25) and a side face label (26) to the respective depressions.

2. A compact disc storage case according to claim 1, **characterized by** said lid (23) having holes (27) in its top panel (14) larger than the projected area of the label tabs (19) and opposing the label tabs (19), which project from the inner surfaces of said sides (15, 16).

3. A compact disc storage case according to claim 1, **characterized by** said label tabs (19) also functioning as closure tabs for said lid (23).

## Patentansprüche

1. Flacher parallelepipedischer Kompaktscheiben- bzw. CD-Aufbewahrungsbehälter (30) mit einem Deckel (23), der bewegbar an einem Ende der Deckelseiten an ein Ende der Seiten (4-6) eines Scheiben bzw. Kassettenaufbewahrungsabteils (22) angelenkt ist,
wobei das Speicherabteil (22) eine Erhebung (24) aufweist, die von der Bodenplatte (3) zwischen den Enden der Seiten (4, 5) vorragt,
**dadurch gekennzeichnet, daß**
die Erhebung (24) mit Vertiefungen geringer Tiefe versehen ist, die in der oberen Seite bzw. Fläche und der seitlichen Seite bzw. Fläche davon ausgebildet ist, um ein Oberseitenetikett (25) und eine Seitenflächenetikett (26) an den entsprechenden Vertiefungen festzulegen.

2. Kompaktscheibenaufbewahrungsbehälter nach Anspruch 1, **dadurch gekennzeichnet, daß** der Deckel (23) Löcher (27) in seiner oberen Fläche bzw. Platte (14) aufweist, die größer als der vorragende Bereich der Etikettlappen bzw. -fortsätze (19) sind und den Etikettlappen (19) gegenüberliegen, welche von den Innenoberflächen der Seiten (15, 16) vorragen.

3. Kompaktscheibenaufbewahrungsbehälter nach Anspruch 1, **dadurch gekennzeichnet, daß** die Etikettlappen (19) auch als Verschlußlappen für den Deckel (23) dienen.

## Revendications

1. Boîtier parallélépipédique et plat (30) de rangement de disque compact ayant un couvercle (23). articulé de façon mobile par une extrémité des côtés du couvercle sur une extrémité des côtés (4-6) d'un compartiment (22) de rangement de disque,
le compartiment (22) de rangement ayant une colonnette (24) faisant saillie du panneau de fond (3) entre les extrémités desdits côtés (4, 5),
**caractérisé en ce que**
la colonnette (24) est pourvue de creux de faible profondeur formés dans sa face supérieure et dans sa face latérale pour la fixation d'une étiquette (25) à la face supérieure et d'une étiquette (26) à la face latérale dans les creux respectifs.

2. Boîtier de rangement du disque compact selon la revendication 1, **caractérisé en ce que** ledit couvercle (23) présente des trous (27) dans son panneau supérieur (14) plus grands que la zone projetée des pattes (19) pour étiquettes et opposés aux pattes (19) pour étiquettes, qui font saillie des surfaces intérieures desdits côtés (15, 16).

3. Boîtier de rangement du disque compact selon la revendication 1, **caractérisé en ce que** lesdites pattes (19) pour étiquettes fonctionnent également en tant que pattes de fermeture pour ledit couvercle (23).
